# EUROPÄISCHE PATENTSCHRIFT

(11) **EP 2 484 197 B1**
(45) Veröffentlichungstag und Bekanntmachung des Hinweises auf die Patenterteilung: **03.12.2014**
(21) Anmeldenummer: 12152084.5
(22) Anmeldetag: 23.01.2012
(51) Int. Cl.: A01F 15/18, B65G 39/16

(54) **Rundballenpresse mit seitlichen Führungen für den Pressriemen**
Round baling press with side guides for the pressing belt
Presse à balles rondes dotée de guidages latéraux pour courroies de presse

(30) Priorität: 07.02.2011 DE 102011003727
(43) Veröffentlichungstag der Anmeldung: 08.08.2012
(73) Patentinhaber: Deere & Company, Moline, IL 61265-8098 (US)
(72) Erfinder: Marques, Manuel, 70130 Vernotte (FR); Beaufort, David, 70100 Arc les Gray (FR); Guerin, Sébastien, 10200 Bar Sur Aube (FR)
(74) Vertreter: Holst, Sönke

(56) Entgegenhaltungen:
- EP-A1- 1 308 078
- US-A- 3 692 674
- US-A- 3 927 814
- US-A- 3 992 987
- US-A- 5 219 063

## Beschreibung

Die Erfindung betrifft eine Rundballenpresse mit einem Ballenpressraum, der von einem Pressmittel in Form eines einzigen Pressriemens oder mehreren, mit ihren benachbarten Kanten direkt aneinander anliegenden Pressriemen umgeben ist, wobei das Pressmittel an einer antreibbaren Walze und an frei mitlaufenden Walzen anliegt und durch seitliche Führungen in axialer Richtung wenigstens einer der Walzen seitlich führbar ist.

### Stand der Technik

Rundballenpressen finden Verwendung, um aus halmförmigem Erntegut Ballen herzustellen und weisen einen Ballenpressraum und ihn umgebende Pressmittel auf. Die Pressmittel sind üblicherweise als Walzen oder als endlose Zugmittel in Form von Ketten mit daran befestigten Querelementen oder Riemen ausgeführt. Derartige Riemen werden insbesondere bei Rundballenpressen mit veränderbarem Ballendurchmesser verwendet und liegen an Walzen an, von denen einige am Rahmen der Rundballenpresse abgestützt und andere gegenüber dem Rahmen beweglich sind, um den Ballenpressraum dem sich nach und nach anwachsenden Ballen anzupassen und ein Auswerfen eines fertiggestellten Ballens zu ermöglichen.

Die teils angetriebenen, zum anderen Teil frei mitlaufenden Walzen erstrecken sich quer zur Vorwärtsrichtung und zur Achse des Ballens. Üblicherweise ist eine Anzahl schmalerer Pressriemen über die Breite des Ballenpressraums verteilt oder es wird ein einziger, breiter Pressriemen verwendet (vgl. die als gattungsbildend angesehene US 5 941 168 A1). Da eine über die Breite des Ballenpressraums ungleichmäßige Beaufschlagung mit Erntegut oder eine Verlagerung des Ernteguts zu einer Seite bei Arbeiten am Hang zu einer seitlichen Verschiebung der Pressriemen führt, was ein unerwünschtes Schleifen der Pressriemen an der Seitenwand der Rundballenpresse zur Folge haben kann, sind Führungen für die Pressriemen vorgeschlagen worden, die aus starren Elementen bestehen, an denen der Pressriemen seitlich anliegt (US 5 261 323 A1). Auch wurde vorgeschlagen, auf einer der Walzen radial überstehende Ringe anzubringen, sodass die einzelnen Pressriemen jeweils zwischen zwei Ringen hindurch laufen (US 3 992 987 A1).

Die DE 528 450 C zeigt einen eine Umkehrschleife bildenden Gurtbandförderer, dessen Gurt in seitlicher Richtung durch in der Gurtebene liegende, frei drehbare Scheiben geführt wird, die am Rand des Gurtes anliegen. In der nachveröffentlichten europäischen Patentanmeldung 10164609.9 wird eine Ballenpresse mit einer aufschwenkbaren Rücktür beschrieben, an der gegenüberliegende Führungswalzen befestigt sind, die einen sich über die Breite des Ballenpressraums erstreckenden Pressriemen zwischen sich einschließen.

### Problem

Das der Erfindung zu Grunde liegende Problem wird darin gesehen, eine Rundballenpresse mit einer verbesserten seitlichen Führung des Pressriemens bereitzustellen.

### Lösung

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Rundballenpresse umfasst einen Ballenpressraum, der von einem Pressmittel in Form eines einzigen Pressriemens oder mehreren, mit ihren benachbarten Kanten direkt aneinander anliegenden Pressriemen umgeben ist. Das Pressmittel liegt an einer (oder mehreren) antreibbaren Walze und an frei mitlaufenden Walzen an. Es wird durch seitliche Führungen in axialer Richtung wenigstens einer der Walzen seitlich geführt. Die seitlichen Führungen sind bezüglich der beim Ballenbildungsbetrieb geltenden Bewegungsrichtung des Pressmittels unmittelbar vor einer antreibbaren Walze angeordnet. An jeder Seite des Pressmittels befindet sich eine Führung. Die seitlichen Führungen bestehen aus in der dortigen Ebene des Pressmittels frei rotierenden Scheiben mit Nuten, in welche sich das Pressmittel hinein erstreckt.

Da das Pressmittel aus einem einzigen Pressriemen oder mehreren, unmittelbar nebeneinander angeordneten Pressriemen besteht, reicht es aus, es nur an seinen beiden Seiten zu führen. Diese Führung erfolgt auf sehr reibungsarme Weise durch die Scheiben, die in der Ebene des Pressmittels frei mitlaufen und eine Nut aufweisen, in welche sich das Pressmittel erstreckt. Es wird demnach nicht nur in seitlicher Richtung, sondern auch in der dazu orthogonalen Richtung geführt. Unmittelbar stromab der Scheiben folgt eine angetriebene Walze, die das Pressmittel in dessen Längsrichtung antreibt. Da die Scheiben das Pressmittel in axialer Richtung der angetriebenen Walze korrekt zentrieren, liegt stets das gesamte Pressmittel an der angetriebenen Walze an. Dadurch ist eine problemlose Kraftübertragung möglich und es wird vermieden, dass unerwünschte Scherkräfte auf nicht über die Walze laufende Bereiche des Pressmittels wirken und die Lebensdauer des Pressmittels verringern.

Auf diese Weise erreicht man eine lange Lebensdauer des Pressmittels und verhindert unerwünschte Reibung zwischen bewegten und unbewegten Teilen der Rundballenpresse.

Weitere derartige Führungen des Pressmittels mit genuteten Scheiben können zusätzlich an beliebigen anderen Stellen der Rundballenpresse angebracht werden. Zusätzliche seitliche Führungen des Pressmittels können durch Ringe erfolgen, die auf angetriebenen oder nicht angetriebenen Walzen zum Umlenken des Pressmittels aufgebracht werden und seitlich am Pressmittel anliegen. In der Zeichnung ist ein nachfolgend näher beschriebenes Ausführungsbeispiel der Erfindung dargestellt. Es zeigt:
- Fig. 1: eine erfindungsgemäße Rundballenpresse in einem fast gefüllten Betriebszustand in Seitenansicht und schematischer Darstellung,
- Fig. 2: eine perspektivische Ansicht der angetriebenen Walze der Rundballenpresse mit einer seitlichen Führung des Pressmittels, und
- Fig. 3: eine perspektivische Ansicht einer nicht angetriebenen Walze der Rundballenpresse mit Ringen zur seitlichen Führung des Pressmittels.

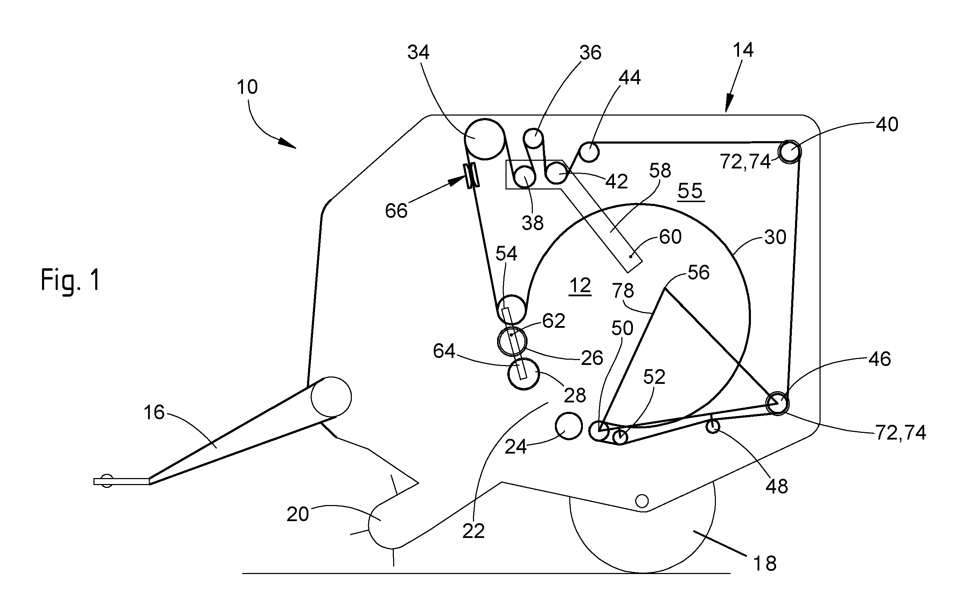

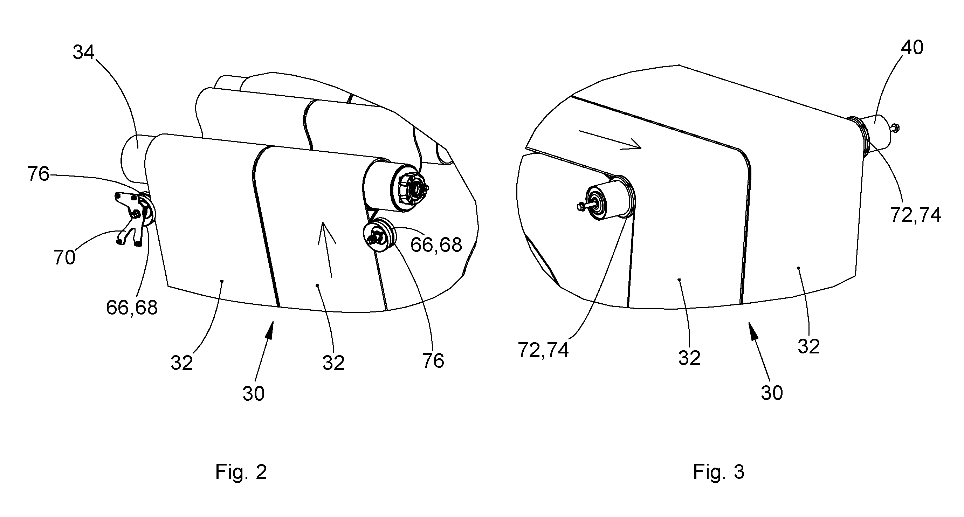

In der Figur 1 ist eine Ausführungsform einer Rundballenpresse 10 dargestellt, die einen Rahmen 14 aufweist, der sich auf einem Fahrwerk 18 abstützt. An der Vorderseite des Rahmens 14 ist eine Deichsel 16 angeordnet, um die Rundballenpresse 10 an einem Traktor anhängen und über ein Feld ziehen zu können. Eine Aufnahmevorrichtung 20 in Form einer Pick-Up dient zur Aufnahme von auf dem Boden liegenden Erntegut, z. B. in einem Schwad abgelegten Heu oder Stroh. Das von der Aufnahmevorrichtung 20 aufgenommene Erntegut wird dem Einlass eines Ballenpressraums 12 zugeführt und dort spiralförmig zu einem rundzylindrischen Ballen aufgerollt, gebunden und anschließend auf den Boden abgelegt.
Am Einlass 22 des Ballenpressraums 12 sind eine untere, stationäre Rolle 24 und zwei obere Rollen 26, 28 positioniert. Der Ballenpressraum 12 wird weiterhin durch ein endloses Pressmittel 30 in Form zweier seitlich unmittelbar nebeneinander anliegender Pressriemen 32 (vgl. Figur 2) gebildet, die um eine Anzahl von ortsfesten Walzen 34, 36, 40, 44, 54 und bewegbaren Walzen 38, 42, 46, 48, 50, 52 geführt wird. Während der Ballenpressraum 12 umfangsseitig im Wesentlichen von dem Pressmittel 30 und den Rollen 24 bis 28 umgeben wird, wird er seitlich von Seitenwänden 55 geschlossen.

Vier der bewegbaren Walzen 46 bis 52 sind am unteren Ende eines deltaförmigen Trägers 78 frei drehbar gelagert, der um seine obere Spitze um eine horizontal und quer zur Vorwärtsrichtung verlaufende Achse 56 schwenkbar angelenkt ist und mit einem Aktor (nicht gezeigt) aus der in Figur 1 dargestellten Ballenbildungsposition in eine nach hinten und oben verschwenkte Ballenauswurfposition verbringbar ist.

Ein Spannmechanismus zur Straffung des Pressmittels 30 umfasst einen Spannarm 58, zwei an dem radial außenliegenden Endbereich des Spannarms beweglich angeordnete Walzen 38, 42 und ein nicht gezeigtes Spannelement. Der Spannarm 58 ist im Bereich der Seitenwände 38 oberhalb und vor der Drehachse 56 um eine horizontal und quer zur Vorwärtsrichtung verlaufende Achse schwenkbar in einem Lager 60 gelagert und erstreckt sich bis eben unter die Ebene, in welcher die ortsfesten oberen Walzen 34, 36, 44 angeordnet sind. Das Spannelement ist in üblicher Weise als eine mechanische Feder oder als ein Hydraulikmotor ausgebildet.

Die oberen Rollen 26, 28 und die Walze 54 sind an einem schwenkbaren Schwenkrahmen 64 befestigt, der in seinem Mittenbereich um eine sich horizontal und quer zur Vorwärtsrichtung erstreckende Schwenkachse 62 gelagert ist. Die Walze 54 und die Rollen 26, 28 sind frei drehbar in dem Schwenkrahmen 64 gelagert, wobei die Rolle 26 koaxial zu der Schwenkachse 62 verläuft. Der Schwenkrahmen 64 kann mittels eines nicht gezeigten Spannelements in eine bestimmte Stellung vorgespannt werden.

Das Pressmittel 30 wird mittels des Spannarms 58 stets so fest an die drehend angetriebene, ortsfeste Walze 34 angelegt, dass seine Mitnahme gewährleistet ist. Auch die Walze 54 wird rotativ angetrieben. Das Pressmittel 30 nimmt einen Anfangszustand ein, in dem es gerade gestreckt den Einlass 22 überbrückt, und einen Endzustand, in dem es sich wie eine große Schlaufe um den Ballen schlingt, etwa wie in der Figur 1 gezeigt. Der Ballenpressraum 12 ist somit in seiner Größe veränderlich, d. h. sein Durchmesser nimmt mit der Größe des Ballens zu. Der Ballen befindet sich während seiner Bildung in dem Ballenpressraum 12 und wird von dem Pressmittel 30 größtenteils umschlungen, fällt aber aus dem Ballenpressraum 12 nach hinten auf den Boden, sobald der Träger 78 mit den beweglichen Walzen 46 bis 52 mit Blick auf die Zeichnung entgegen dem Uhrzeigerdrehsinn nach oben schwenkt.

Die dargestellte Ausführungsform der Ballenpresse ist in der EP 1 308 078 A1 detailliert offenbart. Andere, mögliche Ausführungsformen sind in der DE 198 51 470 A1, DE 10241 215 A1 und der EP 1 264 531 A1 beschrieben.

Zur seitlichen Führung des Pressmittels 30 dienen erste Führungen 66, die sich bezüglich der durch die Pfeile der Figur 2 angedeuteten Bewegungsrichtung des Pressmittels 30 während der Ballenbildung unmittelbar vor der angetriebenen Walze 34 befinden. Die ersten Führungen 66 bestehen aus mit mittigen Nuten 76 versehenen Scheiben 68, die sich in der hier vorliegenden Ebene des Pressmittels 30 befinden und frei um ihre Mittelachsen drehbar gelagert sind. Das Pressmittel 30 erstreckt sich in die Nut der Scheiben 68 hinein und wird somit auch quer zu seiner Bewegungsrichtung geführt. Die Scheiben 68 sind durch Halterungen 70 am Rahmen 14 befestigt und können in einem gewissen Maße in seitlicher Richtung verstellt werden, z. B. durch Langlöcher.

An den frei mitlaufenden Walzen 40 und 46 sind überstehende Ringe 72 montiert, zwischen denen das Pressmittel 30 hindurch läuft und als zweite Führungen 74 dienen, durch die es in seitlicher Richtung geführt wird.

Die Führungen 66, 74 sind jeweils stromauf vor längeren Abschnitten des Pressmittels 30 positioniert, sodass letzteres über seine gesamte Länge in seitlicher Richtung hinreichend geführt und zentrisch über die ortsfesten Walzen 34, 38, 40, 42, 44, 54 und die bewegbaren Walzen 36, 46, 48, 50, 52 geleitet wird.

## Patentansprüche

1. Rundballenpresse (10) mit einem Ballenpressraum (12), der von einem Pressmittel (30) in Form eines einzigen Pressriemens oder mehreren, mit ihren benachbarten Kanten direkt aneinander anliegenden Pressriemen (32) umgeben ist, wobei das Pressmittel (30) an einer antreibbaren Walze (34, 54) und an frei mitlaufenden Walzen (38, 40, 42, 44, 36, 46, 48, 50, 52) anliegt und durch seitliche Führungen (66, 74) in axialer Richtung wenigstens einer der Walzen (38, 40, 42, 44, 54, 36, 46, 48, 50, 52) seitlich führbar ist, **dadurch gekennzeichnet, dass** die seitlichen Führungen (66) bezüglich der beim Ballenbildungsbetrieb geltenden Bewegungsrichtung des Pressmittels (30) unmittelbar vor einer antreibbaren Walze (34) beidseits des Pressmittels (30) angeordnet sind und aus in der Ebene des Pressmittels (30) rotierenden Scheiben (68) mit Nuten (76) aufgebaut sind, in welche sich das Pressmittel (30) hinein erstreckt.

2. Rundballenpresse (10) nach Anspruch 1, **dadurch gekennzeichnet, dass** eine oder mehrere frei mitlaufende Walzen (40, 46) mit überstehenden Ringen (72) ausgestattet ist, zwischen denen das Pressmittel (30) hindurch läuft.

3. Rundballenpresse (10) nach Anspruch 2, **dadurch gekennzeichnet, dass** sie einen Träger (78) umfasst, der zwischen einer Ballenbildungsposition an der Unterseite des Ballenpressraums (12) und einer Ballenauswurfposition rückwärtig und oberhalb des Ballenpressraums (12) verschwenkbar ist und mit frei mitlaufenden Walzen (46 bis 52) versehen ist, von denen eine Walze (46) mit Ringen (72) ausgestattet ist.

4. Rundballenpresse (10) nach Anspruch 2 oder 3, **dadurch gekennzeichnet, dass** die Ringe (72) in axialer Richtung der Walze (40, 46) verstellbar sind.

5. Rundballenpresse nach einem der Ansprüche 1 bis 4, **dadurch gekennzeichnet, dass** die Scheiben (68) in seitlicher Richtung des Pressmittels (30) verstellbar sind.

## Claims

1. Round baler (10) having a baling chamber (12) which is surrounded by a compression means (30) in the form of a single compression belt or a plurality of compression belts (32), the adjacent edges of which butt directly against one another, wherein the compression means (30) rests on a drivable roll (34, 54) and freely running rolls (38, 40, 42, 44, 36, 46, 48, 50, 52) and can be guided laterally through lateral guides (66, 74) in the axial direction of at least one of the rolls (38, 40, 42, 44, 54, 36, 46, 48, 50, 52), **characterized in that** the lateral guides (66) are arranged on both sides of the compression means (30) immediately upstream of a drivable roll (34) with regard to the direction of movement of the compression means (30) which applies during the baling operation, and are constructed from discs (68) which rotate in the plane of the compression means (30), said discs (68) having grooves (76) into which the compression means (30) extends.

2. Round baler (10) according to Claim 1, **characterized in that** one or more freely running rolls (40, 46) are equipped with protruding rings (72), between which the compression means (30) runs through.

3. Round baler (10) according to Claim 2, **characterized in that** it comprises a support (78) which is pivotable between a baling position on the underside of the baling chamber (12) and a bale-ejecting position at the rear of and above the baling chamber (12) and is provided with freely running rolls (46 to 52), of which one roll (46) is equipped with rings (72).

4. Round baler (10) according to Claim 2 or 3, **characterized in that** the rings (72) are adjustable in the axial direction of the roll (40, 46) .

5. Round baler according to one of Claims 1 to 4, **characterized in that** the discs (68) are adjustable in the lateral direction of the compression means (30).

## Revendications

1. Presse à balles rondes (10) comprenant un espace de pressage de balles (12) qui est entouré par un moyen de pressage (30) sous la forme d'une courroie de pressage unique ou de plusieurs courroies de pressage (32) s'appliquant directement les unes contre les autres avec leurs arêtes adjacentes, le moyen de pressage (30) s'appliquant contre un rouleau pouvant être entraîné (34, 54) et contre des rouleaux en roue libre (38, 40, 42, 44, 36, 46, 48, 50, 52) et pouvant être guidé latéralement par des guides latéraux (66, 74) dans la direction axiale d'au moins l'un des rouleaux (38, 40, 42, 44, 54, 36, 46, 48, 50, 52), **caractérisée en ce que** les guides latéraux (66) sont disposés de chaque côté du moyen de pressage (30) directement avant un rouleau pouvant être entraîné (34), par rapport à la direction de déplacement effective en mode de formation de balles du moyen de pressage (30), et sont constitués de disques (68) tournant dans le plan du moyen de pressage (30) avec des rainures (76) dans lesquelles s'étend le moyen de pressage (30) .

2. Presse à balles rondes (10) selon la revendication 1, **caractérisée en ce qu'**un ou plusieurs rouleaux en roue libre (40, 46) sont munis d'anneaux saillants (72) entre lesquels passe le moyen de pressage (30).

3. Presse à balles rondes (10) selon la revendication 2, **caractérisée en ce qu'**elle comprend un support (78) qui peut pivoter entre une position de formation de balles au niveau du côté inférieur de l'espace de pressage de balles (12) et une position d'éjection de balles en arrière et au-dessus de l'espace de pressage de balles (12) et qui est pourvu de rouleaux en roue libre (46 à 52), dont un rouleau (46) est muni d'anneaux (72).

4. Presse à balles rondes (10) selon la revendication 2 ou 3, **caractérisée en ce que** les anneaux (72) peuvent être réglés dans la direction axiale du rouleau (40, 46).

5. Presse à balles rondes selon l'une quelconque des revendications 1 à 4, **caractérisée en ce que** les disques (68) peuvent être réglés dans la direction latérale du moyen de pressage (30).
